# EUROPEAN PATENT SPECIFICATION

(11) **EP 2 410 892 B1**
(45) Date of publication and mention of the grant of the patent: **06.11.2013**
(21) Application number: 10755498.2
(22) Date of filing: 23.03.2010
(51) Int. Cl.: A47C 27/08

(54) **UNIVERSAL BED INSERT, BUILT BY AIR MATTRESS, COMBINED WITH AIRTIGHT VALVES, AND METHOD FOR PRODUCING THEREOF**
MIT EINER LUFTMATRATZE IN KOMBINATION MIT LUFTDICHTEN VENTILEN ERZEUGTER UNIVERSELLER BETTEINSATZ UND HERSTELLUNGSVERFAHREN DAFÜR
GARNITURE DE LIT UNIVERSELLE, CONSTITUÉE D'UN MATELAS À AIR, COMBINÉ À DES VANNES ÉTANCHES À L'AIR ET PROCÉDÉ DE PRODUCTION CORRESPONDANT

(30) Priority: 26.03.2009 HU 0900179
(43) Date of publication of application: 01.02.2012
(73) Proprietor: Kovács, Attila, 1105 Budapest (HU); Kovács, Krisztián, 1105 Budapest (HU)
(72) Inventor: Kovács, Attila, 1105 Budapest (HU); Kovács, Krisztián, 1105 Budapest (HU)
(86) International application number: PCT/HU2010/000031
(87) International publication number: WO 2010/109254

(56) References cited:
- EP-A1- 1 000 599
- EP-A1- 1 543 748
- EP-A2- 1 332 697
- WO-A1-2004/034852
- WO-A1-2008/020259
- CN-A- 1 220 125
- DE-U1-202005 001 252
- RU-C1- 2 269 995
- RU-U1- 54 497
- US-A1- 2006 075 569

## Description

The subject of the invention is a universal bed insert, built by air mattress, combined with airtight valves and method for producing thereof. The insert, produced with the application of said method makes it possible, that the sponge, the airtight covering of the sponge, and the air within the insert result in a higher level of convenience when using the insert.

In order to ensure an ever-improving formation for sitting and lying surfaces, the industry comes up with new solutions all the time. One of the latest solutions is to form the sitting and lying surfaces with special air mattresses. The finish with air mattress offers a special comfort rate for the user by making possible to set the volume of the air stored in the air mattress to their actual requirements, this way adjusting the hardness of the sitting and lying surfaces.

In the state of the art the PCT/US94/08025 patent application published as WO 96/02169 makes known an insulated, inflatable, puncture resistant mattress, which has a lower and upper wide surface joining at the ends, forming so a mantle. The material of the lower and upper surface is a flexible, non-permeable to air, foam of close cells and a flexible airtight material. The ends of the lower surface are connected to the sides, the material of which is a flexible, non-permeable to air, foam of close cell and a flexible airtight material. There are distance piece structural elements between the lower and upper surfaces keeping the lower and upper surfaces apart. One of the surfaces, or both of them are semi-rigid, resulting in the possibility, that the distance piece structural elements must be used at discrete points only. The mantle has at least one locker part, through which liquid can get into the mantle, respectively liquid can leave the mantle.

The US 3 872 525 patent description makes known a method for making an insert, where a combination of compression of flexible foam and liquid is used for producing the insert. During the process a foam of open-cell structure is used, which is enveloped with a watertight cover and fixed as well to the cover, and a valve, in connection with the inside of the cover through which the liquid can flow, holds back the liquid. The insert is consequently used as a structural element, when the liquid is compressed.

The EP 1000 599 European patent description makes known a valve adjusting inner pressure and a cushion provided with the valve. The valve comprises of inlet and outlet parts and is joined an air-permeable, flexible cushion, which is enveloped airtight by a non-permeable to air covering material, and the valve adjusts automatically the inner pressure of the cushion. The said inlet part is open in order to lead the outer air into the cushion, when the inner pressure of the cushion is the same, or lower, than a value determined earlier. The said outlet part is open in order to lead the air inside the cushion out, when the inner pressure of the cushion is the same, or higher, than a value determined earlier. The flexible body of the cushion consists of an upper and lower flexible part, bound to each other. It ensures the automatic optimizing of the flexibility of the cushion in conformity with the requirements of the user.

The US2006075569 document makes known an adjustable foam mattress. The invention modulates the air volume in foam cores of cushioning support devices and any other support apparatus using foam or similar materials. The foam core can be incrementally modulated to realize an infinite number of comfort levels as to softness and support firmness. The core consists of self-inflating open-cell flexible polyurethane foam and is completely sealed within an enclosure fitted over it, with one or more valves installed in the side walls which communicate with the outside air. Through the valves air is selectively withdrawn from the foam core, allowing the foam's density to increase. The invention uses relatively inexpensive foam, but through air volume modulation achieves a tactile feel of supreme softness for the user, without giving up the necessary firmness to support the body, as happens with very soft foam (bottoming-out or hammock-effect). When air is extracted from a self-inflating foam core, the surface of the core will soften uniformly while maintaining its support firmness. Contrary to this, when pressure is exerted on, for example, traditional coil spring core mattresses, their surface will harden. Integral part of the invention is a device using balanced springs in valve assemblies to avoid compression set, an irreversibly solid state of totally air-depleted foam.

The WO200403485 document makes known a foam and coil mattress combination. The invention modulates the air-volume in both mattress-type foam and traditional coil spring cores interactively, obtaining a wide variety of levels of density and indentation force deflection (IFD or spring-back force) .The mattress is enclosed in an airtight cover chamber comprising a valve for evacuating air. In addition, foam and coil spring cores may be enclosed in additional airtight chambers having their own valve to evacuate air. Applying vacuum selectively within the various chamber of the mattress allows to modulate the comfort characteristics of the mattress. The invention takes advantage of the unique interactive behavior of selfinflating foam and coil spring constructions to create multiple levels of comfort for one or more users of the same device.

The EP1543748 document makes known an air mattress with pressure control system. The mattress comprising an external cover in which a padding including one or more air chambers, which can be inflated for supporting the body of at least one user and are connected by means of air inlets to an electric compressor for sucking air from the outside and pump it into one or more groups of air chambers, is arranged, said inlets being provided with electric valves connected to a control unit which is in turn connected to an automatic switch arranged along an electric line between the compressor and an electric power source, wherein the control unit opens or closes the electric valves and/or the automatic switch according to the control signals coming from one or more pressure sensors which measure the pressure in the air chambers.

The DE202005001252 U1 document, also published GB2410893 makes known an inflatable mattress/bed. The inflatable mattress/bed includes an inflatable main chamber having a top panel, a top cover attached to the top panel of the main chamber to define a sealed chamber between the top cover and the top panel, and padding provided in the sealed chamber. The padding provides a solid cushion between the person and the main chamber, so that when a person sleeps on the bed, the person actually lays on the padding and not the top panel of the main chamber, thereby increasing the level of comfort and simulating the feeling of sleeping on a regular bed. An inflatable perimeter tube may also be provided between the top panel of the main chamber and the top cover to assist in inflation and deployment of the bed.

In the state of the art the PCT/HU2007/000075 patent application published as WO 2008/020259 describes an air mattress, having a foam material coated with an airtight layer and aggregated with it, and a pressure-regulating valve regulating the flexibility of the foam material. Within the airtight layer a watered foam material and stiffeners provided with openings permeable to air and an air inlet stub joining the pressure-regulating valve. The foam material is watered directly into the airtight layer and it has an air inlet pipe stub joining the pressure-rcgulating valve, a built-in pressure-regulating valve and an outer pressure-regulating valve. Its pressure-regulating valve joins the pipe-end of the air inlet of the airtight layer and it comprises of an outlet regulating the volume of the outgoing air during use, and a check valve provided with an inlet opening. The foam material is polyurethane foam of open structure.

The drawbacks of the known solutions are, that they do not allow the use of open cell fillers of low density and low compressive stress, and they do not ensure the appropriate, dynamic operation of the insert or cushion due to their formation.

When working out the solution according to the invention we aimed to create such an insert, with the help of which the sensation of proper dynamic suspension can be ensured and the creation of a wide range of comfort rate with simple technical solution is possible.

When creating the solution according to the invention, we realized, that in case a sponge of low density and low compressive stress is used in the insert, and the air-impermeable covering of the air mattress enveloping the sponge is fixed by laminating, then, with the joint effect of the sponge, the air mattress and the air within the insert., the set aim can be achieved. 14 C/4 1..., -1

The invention is a universal bed insert according to claim 1.

In one preferred embodiment of the insert according to the invention the material of the sponge used is polyurethane, or silicone or rubber foam.

In another preferred embodiment of the insert according to the invention the material of the airtight covering of the air mattress is a fabric provided with insulating material, preferably a fabric with PVC coating, and the thickness of the material of the airtight covering of the air mattress (2) is 0.2-1.5 mm.

In a further preferred embodiment of the insert according to the invention it is provided with upholstery preferably with fabric covering.

In a further preferred embodiment of the insert according to the invention the insert is formed as a single section insert.

In a further preferred embodiment of the insert according to the invention the insert is formed as a multisection, divided insert.

In a further preferred embodiment of the insert according to the invention the insert is formed as a single section and divided insert when used in a double bed.

In a further preferred embodiment of the insert according to the invention the insert is placed in the sitting surface, and/or in the back of the sitting furniture.

In a further preferred embodiment of the insert according to the invention the insert is applied in the sitting or lying surfaces of sitting and/or lying furniture.

The invention further is a method for producing universal bed insert, built by air mattress combined with airtight valves, primarily for the production of the insert according to claims 1-4, during said method sponge of open cell structure is provided with airtight covering, and airtight valves are placed in the said covering. The characteristic of the method according to the invention is, that regulating valve and check valve are placed into the sponge cut to size, said sponge is placed into the air mattress cut to size, and the openings of the air mattress are closed airtight by edge-closing or by overlapping, with plastic welding, or using adhesives, then after having checked the airtight, compact closing, the airtight covering of the air mattress is laminated onto all surfaces of the sponge so ensuring the cooperation of the sponge and the air mattress, then the airtight covering of the air mattress is welded to the bodies of the regulating valve as well as to the check valve, so ensuring the airtight closing on this point as well, then the airtight covering of the air mattress is cut out at the openings of the regulating valve and the check valve, making so free the openings of the valves, so ensuring the proper use of the valves, and finally the ready insert is provided with decorating upholstery.

In one preferred application of the method according to the invention the lamination takes place at 100-200°C.

In one preferred application of the method according to the invention several check valves are placed into the insert.

The solution according to the invention is set forth furthermore by the enclosed figures:
The Fig 1 shows the most general realization of the insert according to the invention partly in fracture.
The Fig 2 shows the most general realization of the insert with upholstery according to the invention partly in fracture.
The Fig 3 shows the measuring layout for the measuring of the pressure relations of the insert according to the invention in top view.
The Figs 4-8 show the physical status belonging to certain application positions of the insert according to the invention.
The Fig 9 shows the pressure diagram of the insert according to the invention in different pressure states.
The Fig 10 shows the insert according to the invention formed as a single, one-zone mattress.
The Fig 11 shows the insert according to the invention formed as a single, several-zone mattress with divided air chambers.
The Fig 12 shows the joint formation of one-zone and three-zone insert built together.
The Fig 13 shows the insert according to the invention formed by deep-stitching.
The Fig 14 shows sitting furniture, preferably an armchair formed with the insert according to the invention.
The Fig 15 shows sitting furniture, preferably an armchair and a sofa formed with the insert according to the invention.
The Fig 16 shows the inside of a lorry, formed with the insert according to the invention, where the lower level is formed as a sitting surface.
The Fig 17 shows the inside of a lorry, formed with the insert according to the invention, where the lower level is formed as a lying surface.

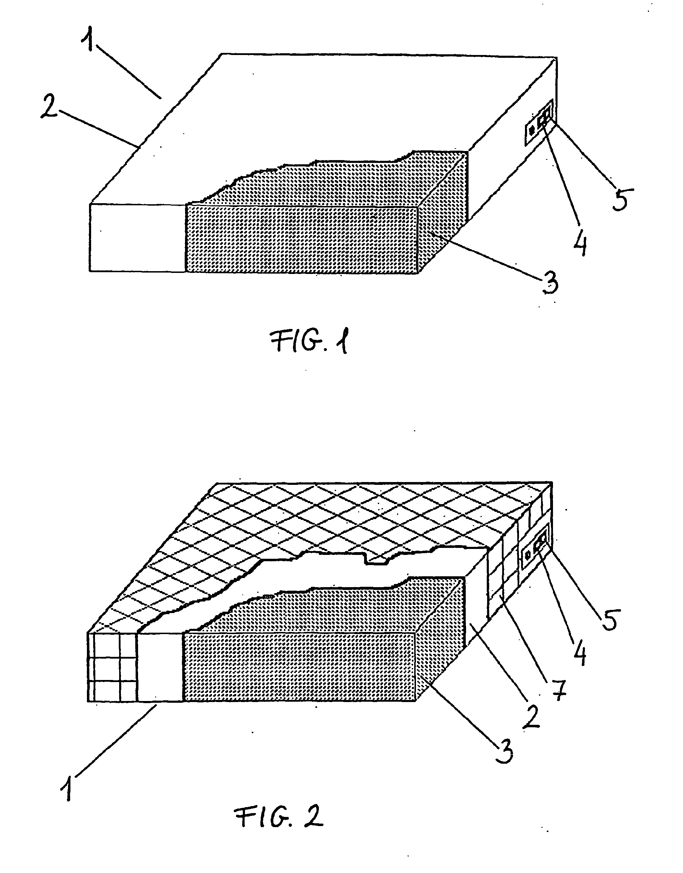

The Fig 1 shows the most general realization of the insert 1 according to the invention partly in fracture. In the figure the insert 1 can be seen, comprising of the air mattress 2 and a flexible sponge 3 of open cell structure in the inside of the air mattress 2. In the insert 1 the regulating valve 4 and the check valve 5 are also joined the airtight cover of the air mattress 2 in an airproof way. The regulating valve 4 and the check valve 5 are preferably fixed to the airtight cover of the air mattress 2 in an airproof way by plastic welding.

Both the regulating valve 4 and the check valve 5 allow the air to flow in one direction only. During the loading the air in the insert 1 leaves the inside of the insert 1 through the regulating valve 4 as long as the required comfort position is achieved resulting from the loading 12 and simultaneously the pressure balance is achieved conforming with the inner pressure set by the regulating valve 4. After the release of the loading the insert 1 draws in the outer air into its inside through the check valve 5, and so it retrieves its original unloaded state.

The Fig 2 shows the most general realization of the insert with upholstery according to the invention partly in fracture.

In the figure the insert 1, the air mattress 2, the sponge 3 as well as the regulating valve 4 and the check valve 5 can be seen. The insert 1 is provided with upholstery 7, preferably with tissue covering depending on different applications.

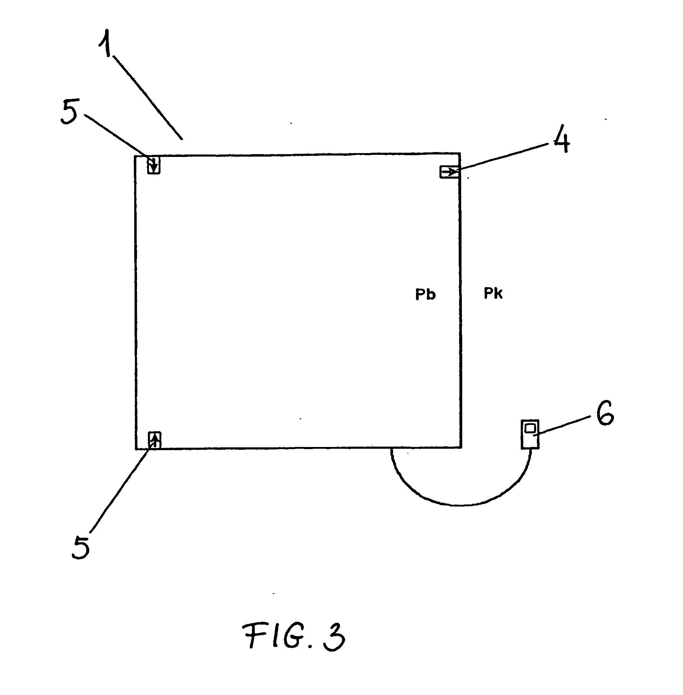

The Fig 3 shows the measuring layout for the measuring of the pressure relations of the insert according to the invention in top view. In the figure the insert 1 can be seen with the regulating valve 4 and the check valves 5. A pressure indicator 6 joins the insert 1, allowing us to continuously measure the pressure inside the air mattress 2 of the insert 1 in case of different loadings. During the measuring five different states are distinguished: initial unloaded state, loaded state, loaded comfort state, deflated state during loading, return to unloaded basic state.

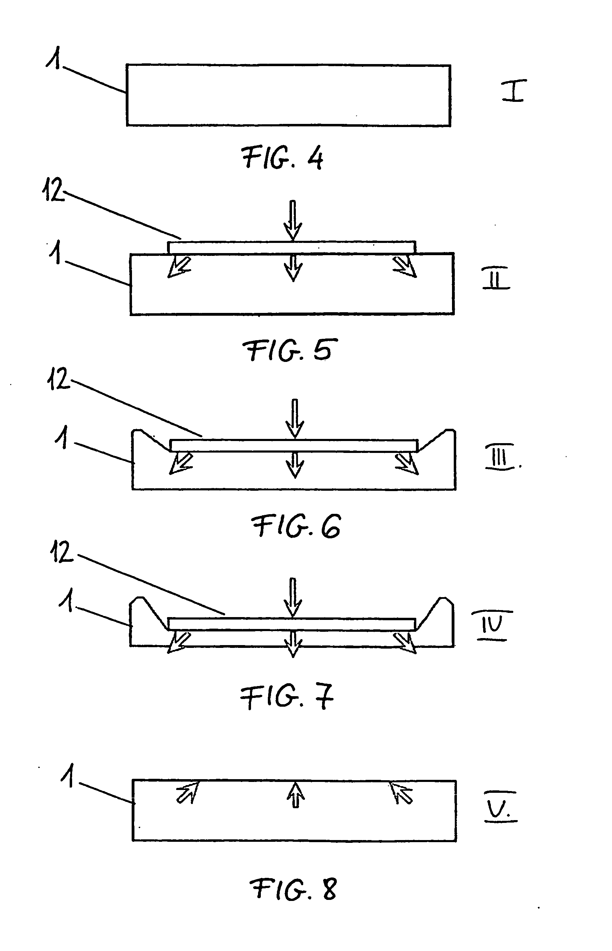

The Figs 4-8 show the physical status belonging to certain application positions of the insert according to the invention. On the basis of our surveys the insert 1 as the subject of the invention can be characterized by five main functioning states. In case of the insert 1 surveyed as a sample, the parameters of the applied sponge 3 are: body density: 19 Kg/m³ pressure stress resistance: 1.3 kPa.

In the Fig 4 the Basic State I can be seen, when the insert is in the initial state without loading.
At this moment the sponge 3 in the insert 1 is in basic state, Pb = Pk, that is the pressure in the inside of the insert 1 is the same as the outside pressure.

In the Fig 5 the Loaded State II can be seen, when the insert 1 is in a completely floated not in deflated state with a small extent dent resulting from loading 12. In this case loading 12 is imposed on the insert 1, but the leaving of the air from the insert 1 is prevented. At this moment the pressure of the air in the insert 1 counterbalances the loading 12.
The relations of pressure now are the following: in case of P_{b} = Pₖ + P_{loading} cca. 100 kgs (1000 N) loading 12 the increase of pressure in case of the insert 1 surveyed as prototype was 0.44 bar.

In the Fig 6 the State III Under Loading comfort position can be seen.
It is a half, or partly deflated state, when the loading 12 on the insert 1 is counterbalanced, held by the air - sponge ensemble. At this moment the sponge 3 of open cell structure in the insert 1 and the air in the sponge 3 and the covering to be taken into consideration mechanically work together and the simultaneous effect of these results in a convenient "comfort" state, which can be of different value in each users. At this moment the pressure relations are the following: P_{b}=Pₖ + P_{comfort}. In case of the prototype tested in case of loading 12 of 100 kgs (1000 N) P_{comfort} = cca. ½ Pₘₐₓ=0.22 bar.

In the Fig 7 the State IV Under Loading deflated state can be seen.
Here the air is let entirely leave the inside of the insert 1 resulting from the effect of loading 12. At this moment the sponge 3 in the insert 1 is completely compressed resulting from the loading 12, and the air in the insert 1 does not hold anything. The pressure balance now is P_{b}=Pₖ. The compressed sponge 3 lends some flexibility of small extent to the insert 1, but this state does not show any comfort, convenience. This is a state, as if the user sat on a soft sponge insert.

The Fig 8 shows the Retrieved State V, during which having released from loading the sponge in the insert 1 returns to its basic state.
When the loading is released, the sponge 3 kicks back itself into its original, basic state, and together with it the insert 1 also gets to its original state without loading 12. During this process in the inside of the insert 1 a "vacuum" of small extent is created, compared to the outside pressure, because it is necessary for the outside air to be able to flow into the inside of the insert 1 to have lower pressure for a while compared to the outside pressure, so now P_{b} < Pₖ. Practically by this the sponge 3 sucks back the air into the inside of the insert 1. In case of the tested prototype the highest value of the difference of pressure was -0.15 bar compared to the outside pressure. Following this the pressure balance is reinstated again.

In the course of the above actual measuring situations it was clear that when the sponge 3 was not built in, showed soft mechanical properties, not suitable for loadbearing, whereas when it was built in to the covering and set to the proper pressure, it made possible the formation of a convenient and comfortable sitting surface. It can be inferred, that the favorable effects of the mattress according to the invention result from the proper ensemble of the mechanical and flexibility features of the sponge 3 - air in the insert 1, being affected by the covering, enveloping the sponge 3 providing the outer airtight surface of the insert 1

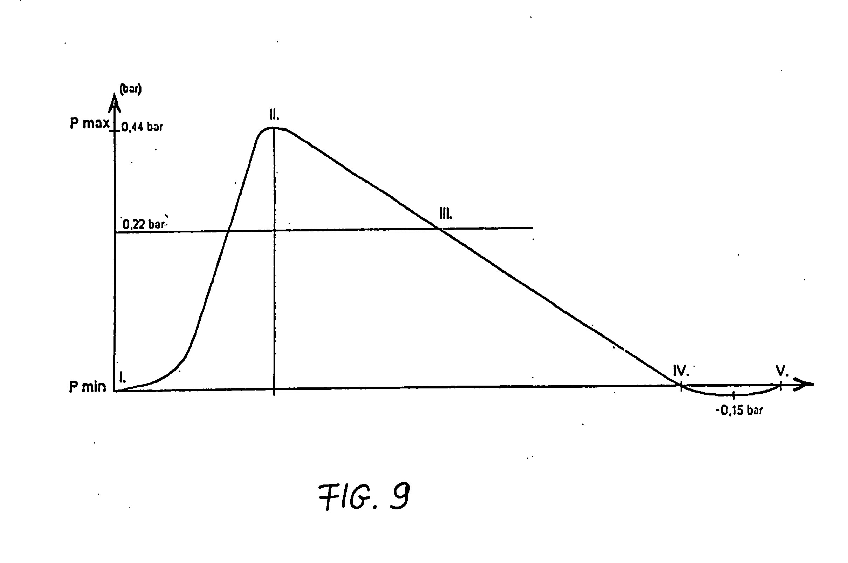

The Fig 9 shows the pressure diagram of the insert according to the invention in different pressure states.
It can be seen in the pressure diagram, that in the Basic State I without loading, the pressure P_{b} of the air in the insert 1 is equal with the pressure Pₖ of the outside air, that is P_{b}=Pₖ. In the Loaded State II of the insert 1, where P_{load}=1000N loading 12 was applied, P_{b}=Pₖ+P_{load}, then Pₘₐₓ=0.44 bar. In comfort State III Under Loading of the insert in case of the air let out of the insert 1 P_{b}=Pₖ+P_{comfort}, where P_{b}=0.22 bar. In case of State IV Under Loading 12 of the inflated insert 1 P_{b}=Pₖ. Then after the State IV, when the loading 12 was released P_{b}= -0.15 bar was measured in the inside of the insert 1 resulting from the vacuum. Following this, in the Retrieved State V without loading the pressure in the insert 1 was first P_{b} < Pₖ, then returning to the basic state it was again P_{b} = Pₖ.

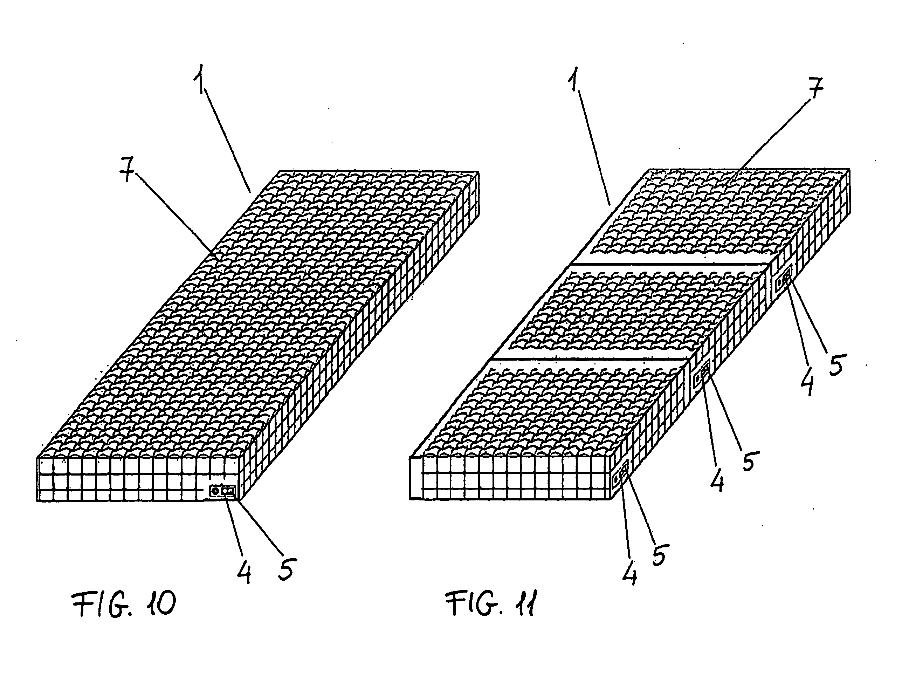

The Fig 10 shows the insert according to the invention formed as a single, one-zone mattress. The figure shows the insert 1 with upholstery covering 7 as well as the regulating valve 4 and check valve 5 formed on the insert 1. This case the insert 1 is formed as a single, one-zone mattress. As this case the whole insert 1 has one single inside space, so the air volume in the insert 1 can be uniformly adjusted with the help of the regulating valve 4 in the insert 1.

The Fig 11 shows the insert according to the invention formed as a single, several-zone, mattress with divided air chambers. It can be seen in the figure, that the insert 1 is formed as a single, several-zone mattress with divided air chambers. This case the whole insert 1 has three inner air chambers, so the hardness of the insert 1 can be adjusted according to requirements in three zones in such a way, that separate regulating valves 4 and check valves 5 in each zone of the insert 1 are built in. So the hardness of the zones under the shoulders, hip and legs can be set to different hardness rates according to requirement.

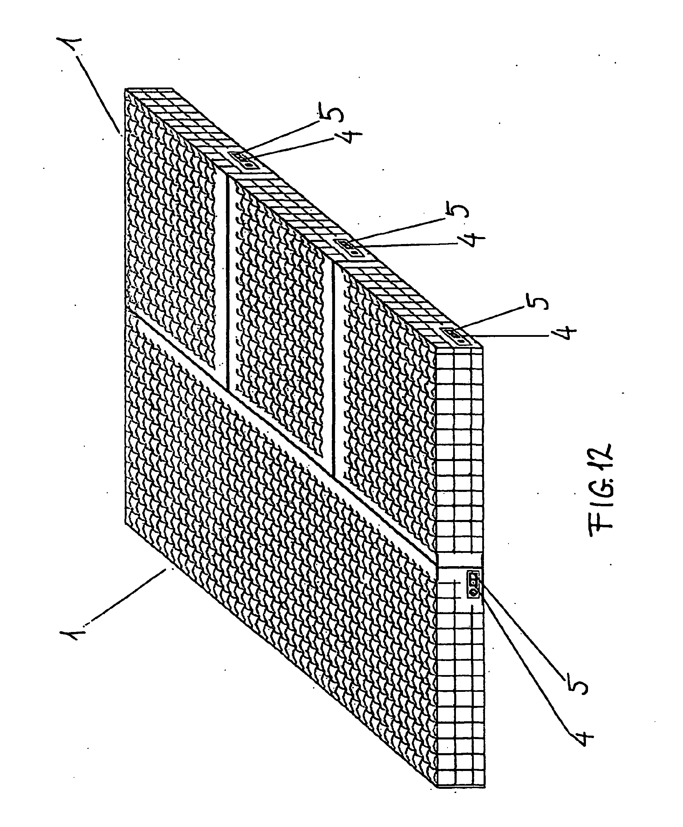

The Fig 12 shows the joint formation of one-zone and three-zone insert 1 built together. In the figure a possible joint formation of an insert, which can be place into a double bed, can be seen. This case such a variation is shown, when one part of the insert 1 ensemble is formed as a one-zone mattress, whereas the other part of the insert 1 is formed as a three-zone mattress.

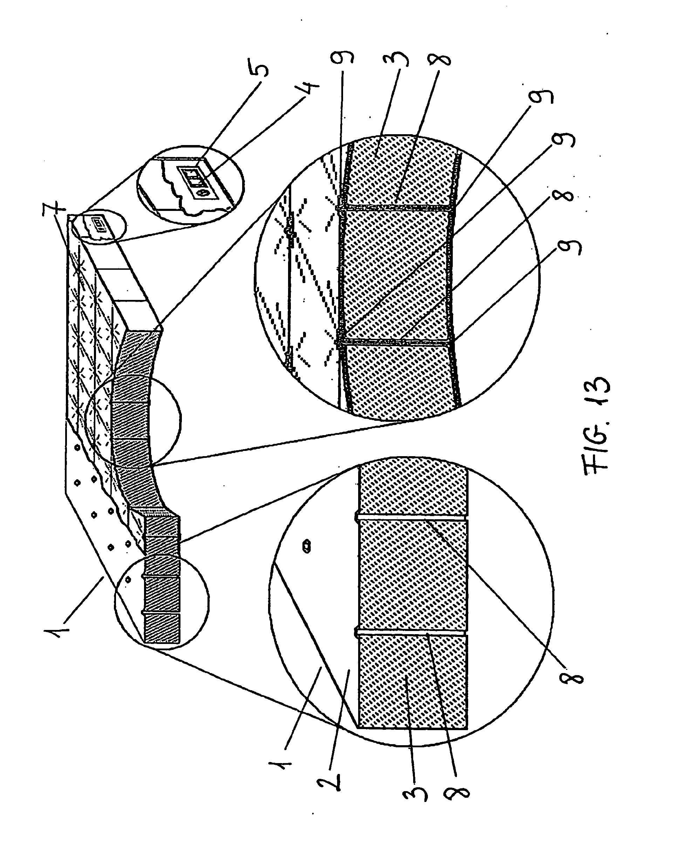

The Fig 13 shows the insert according to the invention formed by deep-stitching.
In the figure the airtight flexible tubes 8 placed in the sponge 3 layer of the insert 1 can be seen, where the ends of the flexible tubes 8 are fixed airtight to the airtight covering of the opposite side of the air mattress 2 of the insert 1. Following the providing of the insert 1 with upholstery 7 bonding material is led through the flexible tubes 8 at both ends of the flexible tubes 8 to fix the buttons 9 placed above the upholstery 7. With the help of this bonding material the insert 1 is slightly contracted, so the buttons 9 sink into the surface of the insert 1 to an extent depending on the straining. This deep stitching is needed due to two reasons, on the one hand it has an aesthetic role, on the other hand deep stitching ensures, that the aesthetic outer upholstery 7 enveloping the insert 1 is fixed to the insert 1 and does not slip on it.

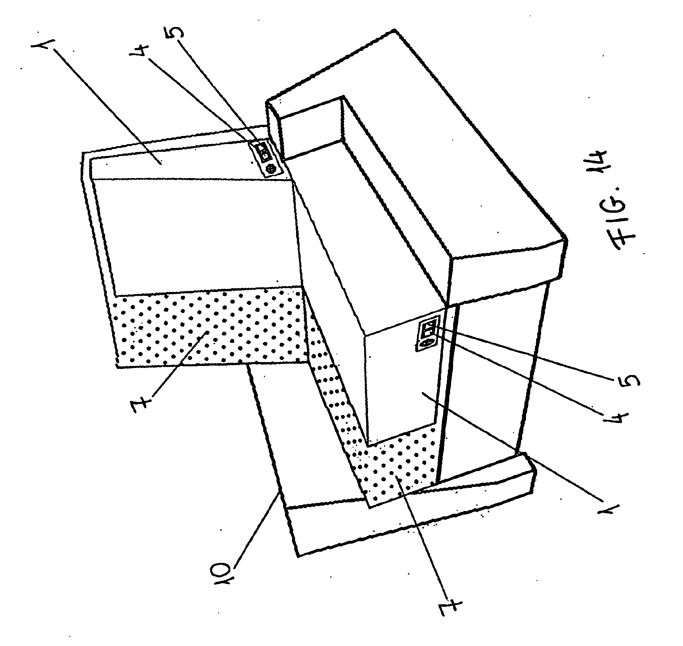

The Fig 14 shows sitting furniture, preferably an armchair formed with the insert 1 according to the invention. In the figure the armchair 10 can be seen, where the insert 1 provided with upholstery 7 serving as the sitting surface as well as the insert 1 provided with upholstery 7 serving as the back of the armchair 10 are placed on the armchair 10 body. Here it is important to ensure, that the regulating valve 4 and the check valve 5 of the inserts 1 are placed in such position, that they can be easily accessed for the adjustment, and the air intake of the inserts 1 is ensured as well.

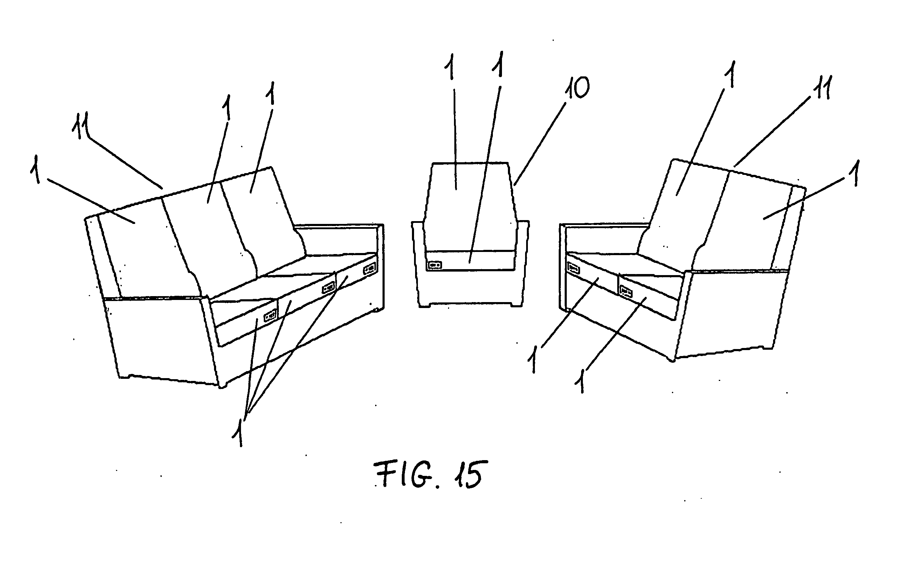

The Fig 15 shows sitting furniture, preferably an armchair and a sofa formed with the insert 1 according to the invention. In the figure the armchair 10 and sofas 11 can be seen where the inserts 1 provided with upholstery 7 serving as the sitting surface as well as the inserts 1 provided with upholstery 7 serving as the back of the sitting furniture are placed on the body of the sitting furniture. It is important to ensure, that the regulating valve 4 and the check valve 5 of the inserts are placed in such position, that they can be easily accessed for the adjustment, and the air intake of the inserts 1 is ensured as well.

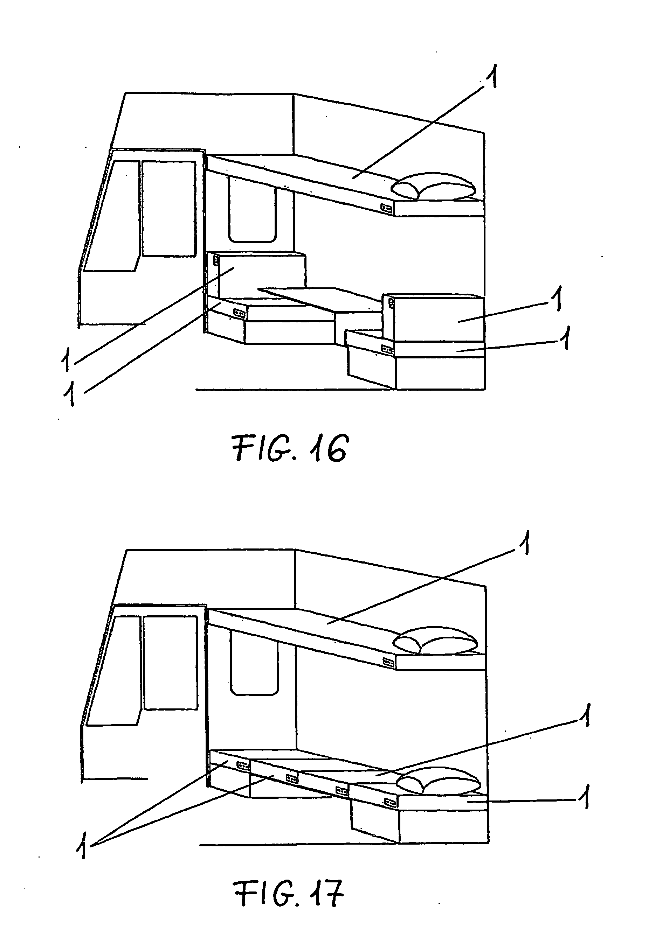

The Fig 16 shows the inside of a lorry, formed with the insert 1 according to the invention, where the lower level is formed as a sitting surface. In the figure the inserts 1 placed on the inner lower level of the lorry formed as sitting furniture can be seen.

The Fig 17 shows the inside of a lorry, formed with the insert 1 according to the invention, where the lower level is formed as a lying surface. In the figure the inserts 1 forming a lying surface inside on the lower level of a lorry can be seen.

In a preferable realization of the solution according to the invention the first step in the production of the insert 1 is the cutting to size of the sponge 3. It is followed by the placing of the regulating valve 4 and the check valve 5 into the body of the sponge 3 on the proper place of the sponge. In the course of placing of the valves 4,5, it is important to take into consideration the placing of the insert 1 on the body of the furniture later on, respectively it is an important factor to consider, that in case of inserts of large size several check valves 5 should be placed into the body of the sponge 3 in given case at points far from each other to ensure that the inflation of the sponge 3 can take place within the shortest possible time.

Following the placing of the valves 4,5 the sponge 3 is placed into the air mattress 2 cut to size. The material of the air mattress 2 is a fabric provided with an insulating layer, preferably a fabric provided with PVC coating. Following the placing of the sponge 3 into the air mattress 2, the opening of the air mattress 2 is closed airtight by edge-closing or by overlapping, with plastic welding, or using adhesives. During the plastic welding a cohesive bonding is formed. Plastic welding can take place with ultrasonic or laser technique. During the production of the air mattress 2 the mechanical characteristics of the airtight covering of the air mattress 2 should be considered, as during lamination taking place later, the material of the airtight covering might shrink to a small extent. In this state the sponge 3 must be in completely airtight state in the air mattress 2.

Following this the compact closing must be checked, and in case a fault is noticed, where air leaves the air mattress 2, then this deficiency must be corrected. Following the checking, the laminating of the air mattress 2 succeeds onto the sponge 3 on every surface. This process takes place in such a way, that the sponge 3 provided with air mattress 2 described above, is placed between jaws of proper temperature, the full surface of the fabric coated preferably with PVC melts to a small extent onto the sponge 3, and so the cooperation of the two material surfaces takes place. The temperature of the jaws for lamination is between 100-200°C depending on the type of insulating material of the load bearing fabric.

The next step is to weld together the material of the bodies of valves 4,5 around the valves 4,5 with the airtight covering of the air mattress 2 ensuring this way the airtight closing at these points as well, as following this process the airtight covering of the air mattress 2 is cut at the openings of the valves 4,5 making so free the openings of the valves 4,5 ensuring the proper use of the valves 4,5. Following this the insert 1 prepared according to the above steps is provided with the necessary aesthetic covering layers during upholstery works.

We use sponge 3 for preferable, concrete realization of the insert 1 according to the invention, with such characteristics, that without the realization of this technology would not be suitable for this purpose. Sponges 3 generally used are useful for their users due to their body density and high compressive stress (flexibility), whereas sponge 3 has only a symbolic role in this insert 1, because it ensures partly the formation of the shape of the insert 1, and its flexibility ensures after the use, that the insert 1 gets back the original, base state, as during loading we sit on the air in the sponge, not on the sponge 3 itself.

In case of the insert according to the invention we can use open cell foam of considerably smaller body density and compressive stress, preferably polyurethane foam, unlike inserts containing only sponge 3, that is in this latter case the higher quality furniture we wish to produce the denser and more flexible foam is used. Eg: N3240, N3543, N4050, N5063, K3250, K4060, K5078, where the first two digits means the body density of the foam in kg/m³ whereas the second two digits indicate the compressive stress in kPa without decimal point, eg: the parameters of foam N5063: 50kg/m³ body density, and 6.3 kPa compressive stress.

In case of the insert 1 according to the invention sponge 3 of small body density and small compressive stress can be used, primarily sponge 3 of 10-23 kg/m³ body density and 1.0-2.5 kPa compressive stress. The longevity of this type of sponge 3 is the highest, because it can be used longer, as the framework deteriorates to a smaller extent due to shock absorption.

The material of the airtight covering of the air mattress 2 of the insert 1 according to the invention is a fabric provided with insulating material, preferably fabric material with PVC coating of thickness of 0.2-1.5 mm.

In case of the insert 1 according to the invention the airtight covering laminated onto the sponge 3, the sponge 3, and the air in the airtight covering have a dynamic connection with each other ensuring a dynamic function with the help of the valves 4,5. Resulting from the use of the sponge 3 the insert 1 retains its shape in each state, irrespective of the volume of air in it. The air in the insert 1 shifts laterally resulting from vertical pressure, and this pressure is absorbed by the flexibility of the airtight covering of the air mattress 2 which is the covering of the sponge 3, and resulting from the lamination, they work together and the flexibility of the airtight covering absorbs the lateral energy resulting from the pressure on the air mattress 2, so ensuring dynamic suspension. The insert 1 absorbs the lateral energy in a divided way, as the material of the air mattress 2 is laminated onto the sponge 3. If the airtight covering of the air mattress 2 was not laminated onto the sponge 3, then the air mattress 2 would slip, resulting from the vertical pressure, creating a feeling of uncertainty in the user.

The function of the insert 1 is ensured by the flexibility of the sponge 3 and the regulation of the air leaving it. The regulating valve 4 placed into the insert 1 regulates the volume of the outgoing air, so the different comfort rates of the cushion can be ensured this way, that is, how soft/hard should be the insert 1 resulting from the loading. The task of the check valve 5 is to ensure the backflow of the air leaving through the regulating valve 4 after the cease of the loading effecting on the insert 1. The sponge 3 wants to get back its base state after the cease of the loading, this characteristic is used for our purpose. Due to this feature, the sponge 3 sucks in air through the check valve 5 into the foam of open cell structure. The inside of the insert is filled again with air retrieving its state before the loading.

As the surface of the sponge 3 is provided with an airtight layer around, therefore air can flow only through valves 4,5 provided for this purpose, both during loading and at the cease of loading. It is an important technical factor, that here the flow of large volumes of air must be ensured, at relative small pressure difference. It refers to both the inside of the insert 1 and the valves 4,5. The valves 4,5 must close tight, leakproof, with definite closing.

To ensure air tightness of insert 1 the cut out material becomes airtight by laser, or ultrasonic technology, the cut surfaces are fixed together opposite each other, or with overlapping according to demand, and the surface is closed as well around the valves to ensure perpetual airtightness.

The PVC coating of the airtight material of the air mattress 2 has a double role. It insulates and fixes the fabric onto the sponge 3. The fabric provides the cushion with the ability to preserve the form, the task of the PVC insulating layer is to create a diffusion with the sponge 3 during the production resulting from the heat. This phase of production is called lamination, when at a temperature above 100°C the sponge 3 is put together with the loadbearing insulating material by rolling or by surface pressure. Another method of making it airtight can be the use of silicon or similar insulating material applying it e.g. by spreading.

The mechanical properties of the airtight covering of the insert 1 are not negligible from the point of view of the proper function of the insert 1. According to the present technological knowledge, it is necessary to create a coating of proper mechanical stability if we want to make a coating of proper air lightness around the sponge 3 creating the inside of the insert 1, that is to form a suitable covering whatever technology is used.

The fields of application of the insert 1 according to the invention are very extensive. To make sitting and lying furniture, it can be placed in the cushions of sitting furniture both as part of the seat and the back. To produce bed inserts, the insert 1 of optional size can be placed into the chosen bed-frame. The insert 1 can be used in special fields as well: healthcare, utility vehicles, vehicle seats, formation of sleeping compartment in vehicles (truck cabin, railway carriage, ship cabin, caravans,) etc.

Further possible application of the insert 1 can be for example the fixing of cargo, when inserts 1 are placed between, or beside the cargo, set them at given pressure, so fixing the cargo. This case the insert 1 plays the role of gap filler.

The advantages of the solution according to the invention are:
It reinstates itself to the basic state without external effect, or compressor. Its lightweight ensures extensive possibility of application. Resulting from the lamination of the airtight covering of the air mattress and the sponge the insert according to the invention provides comfort in a more extensive range. A further advantage is, that by enveloping the foam of small density and small flexibility with an airtight covering we basically change the mechanical properties of the product, even we create a complex product with this intervention and with the help of the valves.

A further advantage is, that the sponge in the covering is protected, so aging is considerably smaller, than in case of traditional inserts, moreover it is minimal, because sponge is not directly exposed to light or to the erosive effect of air.

### References:

- 1 -: insert
- 2 -: air mattress
- 3 -: sponge
- 4 -: regulating valve
- 5 -: check valve
- 6 -: pressure indicator
- 7 -: upholstery
- 8 -: flexible tube
- 9 -: button
- 10 -: armchair
- 11 -: sofa
- 12 -: loading

- P_{b} -: inner pressure
- Pₖ -: outer pressure

## Claims

1. A universal bed insert, built by an air mattress, combined with airtight valves, said insert being built by an air mattress comprising an air-impermeable covering filled with sponge of open cell structure, as well as a regulating valve and one or more check valves built into the air mattress,
**characterized in that**.
- in the air mattress (2) a sponge (3) of low body-density and low compressive stress resistance is used, wherein the value of the body-density is 10-23 kg/m³ and the value of compressive stress resistance is 1.0-2.5 kPa, and
- the air-impermeable covering is laminated onto the sponge (3).

2. The insert according to claim 1, **characterized in that** the material of the sponge (3) used is polyurethane, silicone or rubber foam.

3. The insert according to claim 1 or claim 2, **characterized in that** the material of the airtight covering of the air mattress (2) is a fabric provided with an insulating material, preferably a fabric with a PVC coating, and the thickness of the material of the airtight covering of the air mattress (2) is 0.2-1.5 mm.

4. The insert according to any of claims 1 to 3, **characterized in that** it is provided with upholstery (7), preferably with a fabric covering.

5. The insert according to any of claims 1 to 4, **characterized in that** airtight flexible tubes (8) are placed into the sponge (3) layer of the insert (1), and the ends of the flexible tubes (8) are fixed in an airtight way to the airtight covering of the air mattress (2).

6. The insert according to any of claims 1 to 5, **characterized in that** it is formed as a single section insert.

7. The insert according to any of claims 1 to 5, **characterized in that** it is formed as a multisection, divided insert (1).

8. The insert according to any of claims 1 to 5, **characterized in that** it is formed as a single section and divided insert.

9. The insert according to any of claims 1 to 7, **characterized in that** it is adapted for being used in a sitting surface and/or in a back of a sitting furniture.

10. The insert according to any of claims 1 to 7, **characterized in that** it is adapted for being used in a sitting or a lying surface of a sitting and/or a lying furniture.

11. A method for producing a universal bed insert, built by an air mattress combined with airtight valves, primarily for the production of an insert according to any of claims 1 to 10, the method comprising the steps of providing a sponge of open cell structure with an airtight covering, and placing airtight valves in said covering,
**characterized in that**,
a regulating valve (4) and a check valve (5) are placed into the cut to size sponge (3) having a body-density of 10-23 kg/m³ and a compressive stress resistance of 1.0-2.5 kPa,
said sponge (3) is placed into the air mattress (2) cut to size, and the openings of the air mattress (2) are closed in an airtight way by edge-closing or by overlapping, with plastic welding, or using adhesives, then after having checked airtight, compact closing, the airtight covering of the air mattress (2) is laminated onto all surfaces of the sponge (3) so ensuring the cooperation of the sponge (3) and the air mattress (2), then the airtight covering of the air mattress (2) is welded to the bodies of the regulating valve (4) as well as to the check valve (5), so ensuring the airtight closing on these points as well, then the airtight covering of the air mattress (2) is cut out at the openings of the regulating valve (4) and the check valve (5), making so free the openings of the valves (4,5), so ensuring the proper use of the valves, and finally the ready insert (1) is provided with decorating upholstery (7).

12. The method according to claim 11, **characterized in that** the lamination takes place at 100-200°C.

13. The method according to claim 11 or claim 12, **characterized in that** several check valves (5) are placed into the insert (1).

## Patentansprüche

1. Universalbetteinlage, aufgebaut aus einer Luftmatratze, in Kombination mit luftdichten Ventilen, wobei die Einlage aus einer Luftmatratze besteht, die eine mit offenzelligem Schaumstoff gefüllte, luftundurchlässige Abdeckung sowie ein Regelventil und ein oder mehrere Rückschlagventile, die in die Luftmatratze eingebaut sind, umfasst,
**dadurch gekennzeichnet, dass**
- in der Luftmatratze (2) ein Schaumstoff (3) mit geringer Körperdichte und geringem Druckspannungswiderstand verwendet wird, wobei der Wert der Körperdichte 10-23 kg/m³ und der Wert des Druckspannungswiderstands 1,0 - 2,5 kPa beträgt, und
- die luftundurchlässige Abdeckung auf den Schaumstoff (3) auflaminiert ist.

2. Einlage nach Anspruch 1, **dadurch gekennzeichnet, dass** es sich bei dem Material des verwendeten Schaumstoffs (3) um Polyurethan, Silicon oder Schaumgummi handelt.

3. Einlage nach Anspruch 1 oder Anspruch 2, **dadurch gekennzeichnet, dass** es sich bei dem Material der luftdichten Abdeckung der Luftmatratze (2) um ein mit einem isolierenden Material versehenes Gewebe handelt, vorzugsweise um ein Gewebe mit einer PVC-Beschichtung, wobei die Dicke des Materials der luftdichten Abdeckung der Luftmatratze (2) 0,2 - 1,5 mm beträgt.

4. Einlage nach einem der Ansprüche 1 bis 3, **dadurch gekennzeichnet, dass** sie mit einer Polsterung (7), vorzugsweise mit einer Gewebeabdeckung, versehen ist.

5. Einlage nach einem der Ansprüche 1 bis 4, **dadurch gekennzeichnet, dass** sich in der aus Schaumstoff (3) bestehenden Schicht der Einlage (1) luftdichte, flexible Schläuche (8) befinden, wobei die Enden der flexiblen Schläuche (8) in einer luftdichten Weise an der luftdichten Abdeckung der Luftmatratze (2) fixiert sind.

6. Einlage nach einem der Ansprüche 1 bis 5, **dadurch gekennzeichnet, dass** sie als eine einen einzelnen Bereich umfassende Einlage ausgebildet ist.

7. Einlage nach einem der Ansprüche 1 bis 5, **dadurch gekennzeichnet, dass** sie als eine mehrere Bereiche umfassende, unterteilte Einlage (1) ausgebildet ist.

8. Einlage nach einem der Ansprüche 1 bis 5, **dadurch gekennzeichnet, dass** sie als eine einen einzelnen Bereich umfassende und unterteilte Einlage ausgebildet ist.

9. Einlage nach einem der Ansprüche 1 bis 7, **dadurch gekennzeichnet, dass** sie so ausgeführt ist, dass sie als Sitzfläche und/oder Rückenlehne eines Sitzmöbels verwendet werden kann.

10. Einlage nach einem der Ansprüche 1 bis 7, **dadurch gekennzeichnet, dass** sie so ausgeführt ist, dass sie als Sitz- oder Liegefläche eines Sitz- und/oder Liegemöbels verwendet werden kann.

11. Verfahren zur Herstellung einer Universalbetteinlage, aufgebaut aus einer Luftmatratze, in Kombination mit luftdichten Ventilen, in erster Linie für die Herstellung einer Einlage nach einem der Ansprüche 1 bis 10, wobei das Verfahren die Schritte des Ausstattens eines offenzelligen Schaumstoffs mit einer luftdichten Abdeckung sowie des Einbringens luftdichter Ventile in die Abdeckung umfasst,
**dadurch gekennzeichnet, dass**
ein Regelventil (4) und ein Rückschlagventil (5) in den auf Größe zugeschnittenen Schaumstoff (3) eingebracht werden, der eine Körperdichte von 10 - 23 kg/m³ und einen Druckspannungswiderstand von 1,0 - 2,5 kPa aufweist,
wobei: der Schaumstoff (3) in die auf Größe zugeschnittenen Luftmatratze (2) eingebracht wird, die Öffnungen der Luftmatratze (2) in einer luftdichten Weise durch Kantenverschließen oder durch Überlappungen mittels Kunststoffschweißen oder unter Verwendung von Klebstoffen geschlossen werden, und, nachdem das luftdichte, kompakte Verschließen kontrolliert wurde, die luftdichte Abdeckung der Luftmatratze (2) auf alle Oberflächen des Schaumstoffs (3) auflaminiert wird, um so das Zusammenwirken des Schaumstoffs (3) und der Luftmatratze (2) sicherzustellen, anschließend die luftdichte Abdeckung der Luftmatratze (2) mit den Körpern des Regelventils (4) sowie mit dem Rückschlagventil (5) verschweißt wird, um so das luftdichte Verschließen auch an diesen Punkten sicherzustellen, dann die luftdichte Abdeckung der Luftmatratze (2) an den Öffnungen des Regelventils (4) und des Rückschlagventils (5) ausgeschnitten wird, um die Öffnungen der Ventile (4, 5) freizulegen, so dass der ordnungsgemäße Einsatz der Ventile sichergestellt wird, und zum Schluss die fertige Einlage (1) mit Dekorpolsterung (7) versehen wird.

12. Verfahren nach Anspruch 11, **dadurch gekennzeichnet, dass** das Laminieren bei 100-200°C stattfindet.

13. Verfahren nach Anspruch 11 oder Anspruch 12, **dadurch gekennzeichnet, dass** mehrere Rückschlagventile (5) in die Einlage (1) eingebracht werden.

## Revendications

1. Garniture de lit universelle, constituée d'un matelas à air, combiné à des vannes étanches à l'air, ladite garniture étant constituée par un matelas à air comprenant un recouvrement imperméable à l'air rempli d'éponge de structure à cellules ouvertes, ainsi qu'une vanne de régulation et une ou plusieurs vannes antiretour incorporées dans le matelas à air,
**caractérisée en ce que**
- l'on utilise dans le matelas à air (2) une éponge (3) de faible densité corporelle et de faible résistance aux charges de compression, la valeur de la densité corporelle étant de 10-23 kg/m³ et la valeur de la résistance aux charges de compression étant de 1,0-2,5 kPa, et
- le recouvrement imperméable à l'air est stratifié sur l'éponge (3).

2. Garniture selon la revendication 1, **caractérisée en ce que** le matériau de l'éponge (3) utilisé est du polyuréthane, de la silicone ou de la mousse de caoutchouc.

3. Garniture selon la revendication 1 ou la revendication 2, **caractérisée en ce que** le matériau du recouvrement étanche à l'air du matelas à air (2) est un tissu pourvu d'un matériau isolant, de préférence un tissu avec un revêtement en PVC, et l'épaisseur du matériau du recouvrement étanche à l'air du matelas à air (2) est de 0,2-1,5 mm.

4. Garniture selon l'une quelconque des revendications 1 à 3, **caractérisée en ce qu'**elle est pourvue d'un capitonnage (7), de préférence avec un recouvrement en tissu.

5. Garniture selon l'une quelconque des revendications 1 à 4, **caractérisée en ce que** les tubes flexibles étanches à l'air (8) sont placés dans la couche d'éponge (3) de la garniture (1), et les extrémités des tubes flexibles (8) sont fixées de manière étanche à l'air au recouvrement étanche à l'air du matelas à air (2).

6. Garniture selon l'une quelconque des revendications 1 à 5, **caractérisée en ce qu'**elle est formée sous forme de garniture à section unique.

7. Garniture selon l'une quelconque des revendications 1 à 5, **caractérisée en ce qu'**elle est formée sous forme de garniture divisée en sections multiples (1).

8. Garniture selon l'une quelconque des revendications 1 à 5, **caractérisée en ce qu'**elle est formée sous forme de garniture divisée et à section unique.

9. Garniture selon l'une quelconque des revendications 1 à 7, **caractérisée en ce qu'**elle est prévue pour être utilisée dans une surface d'assise et/ou dans un dossier d'un meuble d'assise.

10. Garniture selon l'une quelconque des revendications 1 à 7, **caractérisée en ce qu'**elle est prévue pour être utilisée dans une surface d'assise ou de couchage d'un meuble d'assise et/ou de couchage.

11. Procédé pour produire une garniture de lit universelle, constituée d'un matelas à air, combiné à des vannes étanches à l'air, principalement pour la production d'une garniture selon l'une quelconque des revendications 1 à 10, le procédé comprenant les étapes consistant à fournir une éponge de structure à cellules ouvertes avec un recouvrement étanche à l'air, et à placer des vannes étanches à l'air dans ledit recouvrement,
**caractérisé en ce que**
l'on place une vanne de régulation (4) et une vanne antiretour (5) dans l'éponge (3) découpée sur mesure ayant une densité corporelle de 10-23 kg/m³ et une résistance aux charges de compression de 1,0-2,5 kPa,
ladite éponge (3) est placée dans le matelas à air (2) découpé sur mesure, et les ouvertures du matelas à air (2) sont fermées de manière étanche à l'air par fermeture des bords ou chevauchement, avec soudage plastique, ou en utilisant des adhésifs, puis, après avoir vérifié l'étanchéité à l'air, par fermeture compacte, le recouvrement étanche à l'air du matelas à air (2) est stratifié sur toutes les surfaces de l'éponge (3) de manière à assurer la coopération de l'éponge (3) et du matelas à air (2), puis le recouvrement étanche à l'air du matelas à air (2) est soudé aux corps de la vanne de régulation (4) ainsi qu'à la vanne antiretour (5), de manière à assurer la fermeture étanche à l'air également en ces points, puis le recouvrement étanche à l'air du matelas à air (2) est découpé au niveau des ouvertures de la vanne de régulation (4) et de la vanne antiretour (5), en libérant ainsi les ouvertures des vannes (4, 5) de manière à garantir l'usage correct des vannes, et finalement la garniture (1) prêtre est pourvue du capitonnage décoratif (7).

12. Procédé selon la revendication 11, **caractérisé en ce que** la stratification a lieu à 100-200°C.

13. Procédé selon la revendication 11 ou la revendication 12, **caractérisé en ce que** plusieurs vannes antiretour (5) sont placées dans la garniture (1).
